# EUROPEAN PATENT APPLICATION

(11) **EP 4 693 056 A1**
(43) Date of publication of application: **11.02.2026**
(21) Application number: 24784172.9
(22) Date of filing: 28.03.2024
(51) Int. Cl.: G06F 13/40, H04L 12/40

(54) **SIGNAL TRANSMISSION SYSTEM AND ROBOT**

(30) Priority: 04.04.2023 CN 202320828930 U
(71) Applicant: Syrius Robotics Co., Ltd., Shenzhen, Guangdong 518000 (CN)
(72) Inventor: ZHAO, Dongliang, Shenzhen, Guangdong 518000 (CN)
(74) Representative: Renaudo, Adrien Hanouar
(86) International application number: PCT/CN2024/084570
(87) International publication number: WO 2024/208087

(57) **Abstract**

Embodiments of the present disclosure relate to a signal transmission system and a robot. Said signal transmission system includes: a signal transmission host and a signal transmission slave, where the signal transmission host and the signal transmission slave are connected via a universal serial bus USB3.0 data cable, and the USB3.0 data cable includes an auxiliary channel; the auxiliary channel in the USB3.0 data cable is configured to transmit a CAN signal between the signal transmission host and the signal transmission slave.

## Description

### CROSS-REFERENCE TO RELATED APPLICATIONS

The present disclosure makes reference to Chinese Patent Application No. 202320828930.0, entitled "Signal Transmission System and Robot", filed on April 04, 2023, which is incorporated herein by reference in its entirety.

### FIELD

The present disclosure relates to the technical field of signal transmission, and in particular, to a signal transmission system and a robot.

### BACKGROUND

CAN (Controller Area Network) signal is a signal that complies with the CAN communication protocol. In the prior art, an independent networking bus and physical interface are usually used to transmit CAN signals. For example, in a robot's autonomous navigation system, a USB (Universal Serial Bus) 3.0 data cable is usually used to transmit RGB (Red, Green, Blue) video streams, depth information, IMU (Inertial Measurement Unit) and other data collected by a vision module. In addition, CAN signals are transmitted through an additional CAN bus (or other networking buses) to synchronize the time of the data collected by the vision module.

However, the use of independent networking buses and physical interfaces to transmit CAN signals increases the quantity of wiring harnesses and interface occupancy connecting the CAN signal senders and receivers.

### SUMMARY

To solve some or all of the above technical problems, embodiments of the present disclosure provide a signal transmission system and a robot.

Embodiments of the present disclosure relate to a signal transmission system and a robot. Said signal transmission system includes: a signal transmission host and a signal transmission slave, where the signal transmission host and the signal transmission slave are connected via a universal serial bus USB3.0 data cable, and the USB3.0 data cable includes an auxiliary channel; the auxiliary channel in the USB3.0 data cable is configured to transmit a CAN signal between the signal transmission host and the signal transmission slave.

Embodiments of the present disclosure provides a robot, including the signal transmission system of any one of the embodiments.

### BRIEF DESCRIPTION OF THE DRAWINGS

FIG. 1 is a schematic structural diagram of a signal transmission system according to an embodiment of the present disclosure;
FIG. 2 is a schematic structural diagram of another signal transmission system according to an embodiment of the present disclosure;
FIG. 3 is a schematic diagram of pin configurations of a USB socket and a cable plug; and
FIG. 4 is a schematic structural diagram of a robot according to an embodiment of the present disclosure.

### DETAILED DESCRIPTION OF EXAMPLE EMBODIMENTS

Various exemplary embodiments of the present disclosure will now be described in detail with reference to the accompanying drawings. It should be noted that the relative arrangement of components and steps, the numerical expressions and numerical values set forth in these embodiments do not limit the scope of the present disclosure unless specifically stated otherwise.

Those skilled in the art will understand that the terms "first" and "second" in the embodiments of the present disclosure are only used to distinguish objects such as different steps, devices or modules, and neither represent any specific technical meaning nor indicate the logical order between them.

In the present embodiment, "a plurality of" may refer to two or more than two, and "at least one" may refer to one, two, or more than two.

Any component, data or structure mentioned in the embodiments of the present disclosure can generally be understood as one or more, unless explicitly limited or given a contrary suggestion in the context.

In addition, the term "and/or" in the present disclosure is merely a description of the association relationship between associated objects, indicating that three relationships may exist. For example, A and/or B can represent three situations: A exists alone, A and B exist at the same time, and B exists alone. In addition, the character "/" in the present disclosure generally indicates that the preceding and following related objects are in an "or" relationship.

The description of various embodiments in the present disclosure focuses on the differences between the various embodiments. The same or similar aspects can be referenced with each other, and for the sake of brevity, they are not described one by one.

The following description of at least one exemplary embodiment is merely illustrative in nature and is in no way intended to limit the present disclosure, its application, or uses.

Technologies, methods, and device known to ordinary technicians in the relevant art may not be discussed in detail, but where appropriate, the above-mentioned technologies, methods, and device should be considered part of the specification.

In the embodiments of the present disclosure, similar reference numerals and letters represent similar items in the following figures, and therefore, once an item is defined in one figure, it does not need to be further discussed in the subsequent figures.

In the absence of conflict, the embodiments of the present disclosure and the features thereof may be combined with each other. To facilitate understanding of the embodiments of the present disclosure, the present disclosure will be described in detail below with reference to the accompanying drawings and in combination with the embodiments. Obviously, the described embodiments are only part of the embodiments of the present disclosure, rather than all the embodiments. Based on the embodiments of the present disclosure, all other embodiments obtained by those skilled in the art without creative work shall fall within the scope of protection of the present disclosure.

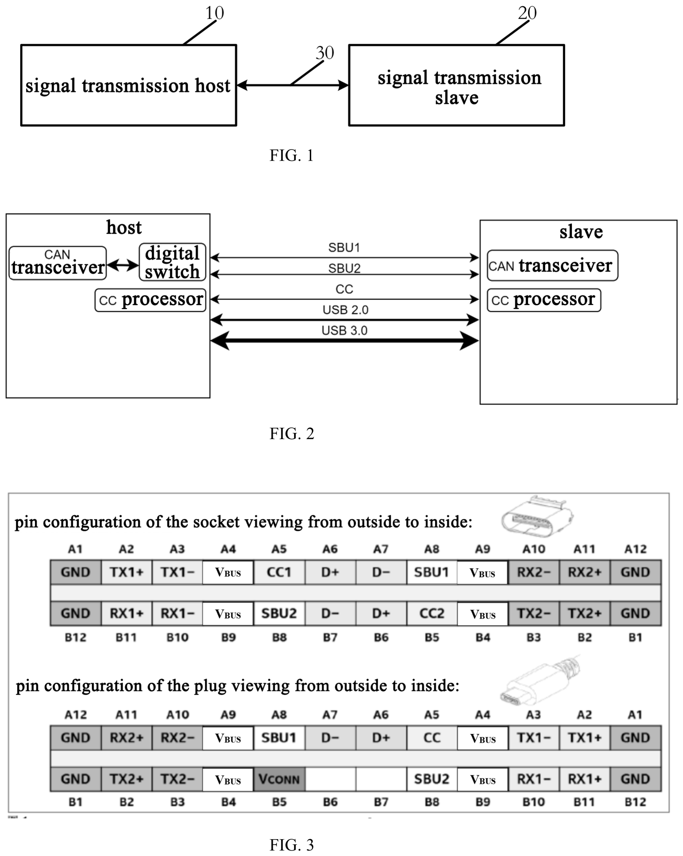

FIG. 1 is a schematic structural diagram of a signal transmission system according to an embodiment of the present disclosure. As shown in FIG. 1, the signal transmission system includes a signal transmission host 10 and a signal transmission slave 20.

The signal transmission host 10 and the signal transmission slave 20 are connected via a universal serial bus USB3.0 data cable 30. The USB3.0 data cable 30 includes an auxiliary channel.

The auxiliary channel may include an SBU1 channel and an SBU2 channel; the SBU1 channel corresponds to the A8 pin of the USB3.0 data cable, and the SBU2 corresponds to the B8 pin of the USB3.0 data cable.

A schematic diagram of the pin configurations of the USB socket and the cable plug may be shown in FIG. 3.

The auxiliary channel in the USB3.0 data cable 30 is configured to transmit a CAN signal between the signal transmission host 10 and the signal transmission slave 20.

As an example, the signal transmission host 10 and the signal transmission slave 20 may be marked with a mark for indicating the insertion direction of the USB3.0 data cable 30. In this way, the mark can ensure that the USB3.0 data cable 30 is inserted into the signal transmission host 10 and the signal transmission slave 20 in a specific direction, thereby ensuring the correct establishment of a channel between the signal transmission host 10 and the signal transmission slave 20.

In some optional implementations of the present embodiment, the signal transmission host 10 includes a first identification unit.

The first identification unit is configured to identify a first insertion direction of the USB3.0 data cable relative to the signal transmission host 10, and then determine whether to switch the data transmission direction of the USB3.0 data cable based on the first insertion direction.

The first identification unit may include a CC (Configuration Channel) processor, the CC processor may be configured to identify the insertion direction of a CC cable (that is, the first insertion direction mentioned above), and then determine whether to switch the direction of the USB3.0 data cable based on the insertion direction of the CC cable, so as to ensure the correct establishment of a channel for both the signal transmission host and the signal transmission slave.

The first insertion direction may be an insertion direction of the USB3.0 data cable relative to the signal transmission host.

In practice, each time the USB3.0 data cable is plugged into the signal transmission host, the first identification unit may identify the first insertion direction.

In the above optional implementation, the first identification unit is used to identify the insertion direction of the USB3.0 data cable 30 relative to the signal transmission host 10, and then determine whether to switch the data transmission direction of the USB3.0 data cable 30, which may ensure the correct establishment of the channel between the signal transmission host 10 and the signal transmission slave 20.

In some application scenarios of the above optional implementation methods, the signal transmission slave includes a second identification unit.

The second identification unit is configured to identify a second insertion direction of the USB3.0 data cable 30 relative to the signal transmission slave 20, and then send direction data indicating the second insertion direction to the signal transmission host.

The second identification unit may include a CC (channel configure) processor, the CC processor may be configured to identify the insertion direction of the CC cable (i.e., the second insertion direction mentioned above), and then determine whether to switch the data transmission direction of the USB3.0 data cable based on the insertion direction of the CC cable, so as to ensure the correct establishment of the channel on both the signal transmission host and the signal transmission slave.

The second insertion direction may be an insertion direction of the USB3.0 data cable 30 relative to the signal transmission slave device 20.

In practice, each time the USB3.0 data cable 30 is plugged into the signal transmission slave device 20, the second identification unit may identify the second insertion direction.

In the above application scenario, the second identification unit is used to identify the insertion direction of the USB3.0 data cable 30 relative to the signal transmission slave 20, and then send the direction data representing the insertion direction to the signal transmission host 10, so that the signal transmission host 10 may determine whether to switch the data transmission direction of the USB3.0 data cable 30, which may ensure the correct establishment of the channel of both the signal transmission host 10 and the signal transmission slave 20.

In some cases of the above application scenarios, the first identification unit is configured to determine whether to switch the data transmission direction of the USB3.0 data cable 30 based on the first insertion direction and the direction data.

Each time the USB3.0 data cable 30 is re-plugged into the signal transmission host 10 or the signal transmission slave 20, the CC cable direction of the USB3.0 data cable 30 may be updated. The slave side needs to promptly inform the host of the updated CC direction (i.e., the second insertion direction mentioned above). The host queries the following truth table (i.e., Table 1) based on the CC directions of both parties to determine whether to switch the data transmission direction of the USB3.0 data cable.

**Table 1:**

| .the host | | the slave | | whether to switch |
|---|---|---|---|---|
| CC1 | NC | CC1 | NC | no |
| NC | CC2 | NC | CC2 | no |
| CC1 | NC | NC | CC2 | yes |
| NC | CC2 | CC1 | NC | yes |

In the above table, CC1 and CC2 represent the two CC signal cables in the signal transmission host and signal transmission slave, respectively, and NC means the cable is disconnected.

If the CC1 signal cable on the host side is connected to the CC1 signal cable on the slave side, or the CC2 signal cable on the host side is connected to the CC2 signal cable on the slave side, there is no need to switch the data transmission direction of the USB3.0 data cable; if the CC1 signal cable and CC2 signal cable on the host side, or the CC1 signal cable and CC2 signal cable on the host side are disconnected, it is necessary to switch the data transmission direction of the USB3.0 data cable.

In the above situation, the first identification unit may determine whether to switch the data transmission direction of the USB3.0 data cable 30 based on the first insertion direction and the direction data, to ensure the correct establishment of the channel between the signal transmission host 10 and the signal transmission slave 20.

In some application scenarios of the above optional implementations, the USB3.0 data cable includes a first TYPE-C interface and a second TYPE-C interface.

The first TYPE-C interface is configured to connect to the signal transmission host 10.

The second TYPE-C interface is configured to connect to the signal transmission slave 20.

Since the TYPE-C interface is designed to be symmetrical on two sides, it may be used by blind plugging, thereby facilitating the connection of the USB3.0 data cable 30 between the signal transmission host 10 and the signal transmission slave 20.

In some optional implementations of the present embodiment, the signal transmission host 10 includes a digital switch, and when the first identification unit determines to switch the data transmission direction, the digital switch may switch the data transmission direction.

In the above optional implementation, the data transmission direction may be switched by a digital switch provided on the signal transmission host side, thereby ensuring the matching of the CAN signal level and the correct transmission of the CAN signal.

In some optional implementations of the present embodiment, the signal transmission slave machine 20 includes a camera module, and the signal transmission host includes an upper monitor of the camera module.

The camera module is configured to: transmit the data collected by the camera module to the upper monitor via the USB3.0 data cable.

The above-mentioned camera module is also called a visual module. For example, the camera module includes at least one of the following: RGB (Red, Green, Blue) video stream, depth information, IMU (Inertial Measurement Unit) and other data. The data provided by the camera module is transmitted to the upper monitor for processing and may be used for obstacle avoidance, repositioning and other aspects.

In the above optional implementation method, one USB3.0 data cable may be used to transmit the data provided by the camera module and the CAN signal, reducing the quantity of wiring harness connections between the signal transmission host and the signal transmission slave in scenarios where both the data provided by the camera module and the CAN signal need to be transmitted, and reducing the occupancy of a physical interface in the signal transmission host and the signal transmission slave. In addition, the CAN signal is transmitted through a spare auxiliary channel in the USB3.0 data cable, so the transmission of data collected by the camera module is not affected.

In some optional implementations of the present embodiment, the signal transmission host 10 and the signal transmission slave 20 respectively include a CAN transceiver; and the CAN transceiver is configured to transmit the CAN signal.

Said CAN transceiver can be configured to receive and send a CAN signal.

In the above optional implementation, the CAN signal is transmitted through the CAN transceivers respectively included in the signal transmission host and the signal transmission slave.

The signal transmission system provided by the embodiment of the present disclosure includes: a signal transmission host and a signal transmission slave, where: the signal transmission host and the signal transmission slave are connected via a universal serial bus USB3.0 data cable, and the USB3.0 data cable includes an auxiliary channel; the auxiliary channel in the USB3.0 data cable is configured to transmit a CAN signal between the signal transmission host and the signal transmission slave. Therefore, the USB3.0 data cable may be used to transmit the CAN signal, enriching the transmission methods of the CAN signal. In addition, the quantity of wiring harness connections between the signal transmission host and the signal transmission slave may be reduced, and the occupancy of the physical interfaces in the signal transmission host and the signal transmission slave may be reduced. In addition, the transmission of the CAN signal through the spare auxiliary channel in the USB3.0 data cable may avoid affecting the data transmission of other channels.

The following is an illustrative description of the embodiments of the present disclosure, but it should be noted that the embodiments of the present disclosure may have the features described below, but the following description does not constitute a limitation on the scope of protection of the embodiments of the present disclosure.

FIG. 2 is a schematic structural diagram of another signal transmission system according to an embodiment of the present disclosure.

In order to transmit the CAN signal on the USB3.0 data cable, two more channels are required on the data cable. Here, a dual TYPE-C interface is selected. The transmission of the CAN signal occupies the SBU1 and SBU2 channels on the TYPE-C. TYPE-C is designed to be symmetrical on two sides, making it easy to use for blind plugging. Here, the host and slave sides use the CC pin to identify the insertion direction and then determine whether to flip the data to ensure that the channel is established correctly. The AB signals of the CAN bus have polarity, so polarity matching is also required for data transmission. However, due to the limited space of the vision module, it is difficult to add a polarity switching chip. Furthermore, since the CC cable has already communicated the data direction once, the present embodiment may fully utilize this result and only needs to switch once on the host side.

Specifically, first, as shown in FIG. 3, FIG. 3 shows a schematic diagram of the pin configurations of the USB socket and the cable plug. Although the USB protocol defines TYPE-C as including 24 pins, from a cost perspective, it is actually possible to use 2 power pins, 2 USB2.0 pins, 4 USB3.0 pins, 2 auxiliary signal pins, and 1 CC cable pin. The USB harness used in the present embodiment includes 11 pins in total, including USB3.0, USB 2.0, CC cable and auxiliary signal. In the present embodiment, the auxiliary signal pin is used to transmit the CAN signal.

The visual module mentioned in the present embodiment (that is, the camera module mentioned above) is hereinafter referred to as the slave (that is, the signal transmission slave mentioned above), and the upper monitor that communicates with the visual module is referred to as the host (that is, the signal transmission host mentioned above). Since the host and slave need to communicate over USB3.0, both the host and slave may contain a CC processor. The task of the CC processor is to identify the insertion direction of the CC cable (i.e., the first insertion direction and the second insertion direction mentioned above) and switch the direction of the USB3.0 data cable to ensure that the channel on both sides are correctly established.

Because CAN signal transmission is required, both the host and the slave contain a CAN transceiver. The half-duplex CAN bus contains two signals, AB. The AB signal level difference is used to realize 01 signal transmission. If the polarity matching is wrong, it will cause bus abnormality. Therefore, the present embodiment determines whether to switch the data transmission direction of the USB3.0 data cable by identifying the insertion direction of the CC cable, which ensures that the CAN signal level may be successfully matched regardless of how the TYPE-C interface is plugged in or out, regardless of whether it is on the host or slave side.

Because both the host and the slave have a CC processor, the CC cable direction will be updated every time the TYPE-C is re-plugged. The slave side only needs to inform the host of the updated CC direction in a timely manner. The host queries the truth table (i.e., Table 1) according to the CC direction of both parties to decide whether to switch the data transmission direction of the USB3.0 data cable through the digital switch, to ensure the matching of the CAN signal level.

In addition to the contents described above, the present embodiment may also include the corresponding technical features described in the embodiment corresponding to FIG. 1, thereby realizing the technical effects of the signal transmission system shown in FIG. 1. For details, please refer to the relevant description of FIG. 1. For the sake of brevity, it will not be repeated here.

The signal transmission system provided by the embodiment of the present disclosure may enable the visual module to quickly synchronize time without adding additional wiring harnesses. One standard dual TYPE-C data cable may transmit both the USB3.0 data and the CAN signal, and supports hot plugging in either direction.

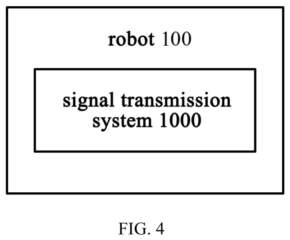

FIG. 4 is a schematic structural diagram of a robot according to an embodiment of the present disclosure. The robot includes the signal transmission system according to any one of the embodiments described in the first aspect above.

Specifically, the robot 100 includes a signal transmission system 1000, and the signal transmission system 1000 includes: a signal transmission host and a signal transmission slave; where,
the signal transmission host and the signal transmission slave are connected via a universal serial bus USB3.0 data cable, and the USB3.0 data cable includes an auxiliary channel;
the auxiliary channel in the USB3.0 data cable is configured to transmit the CAN signal between the signal transmission host and the signal transmission slave.

In some optional implementations of the present embodiment, the robot 100 is configured to: perform a time synchronization on the data collected by the camera module via the CAN signal, to obtain a synchronized data; and then perform a navigation based on the synchronized data
The data collected by the camera module is transmitted via the USB3.0 data cable.

In the above optional implementation, the data collected by the camera module and the CAN signal may be transmitted through one USB3.0 data cable, so that the data collected by the camera module may be synchronized more quickly without increasing the quantity of wiring harnesses.

In addition to the contents described above, the present embodiment may also include the corresponding technical features described in the embodiment corresponding to FIG. 1, thereby realizing the technical effects of the signal transmission system shown in FIG. 1. For details, please refer to the relevant description of FIG. 1. For the sake of brevity, it will not be repeated here.

The robot provided by the embodiment of the present disclosure may use a USB3.0 data cable to transmit the CAN signal, enriching the transmission methods of the CAN signal, and may reduce the quantity of wiring harness connections between the signal transmission host and the signal transmission slave, reducing the occupancy of the physical interfaces in the signal transmission host and the signal transmission slave. In addition, the transmission of CAN signals through the spare auxiliary channel in the USB3.0 data cable may avoid affecting the data transmission of other channels.

The specific implementation methods described above further illustrate the objectives, technical solutions and beneficial effects of the present disclosure in detail. It should be understood that the above description is only a specific implementation method of the present disclosure and is not intended to limit the scope of protection of the present disclosure. Any modifications, equivalent substitutions, improvements, etc. made within the spirit and principles of the present disclosure should be included in the scope of protection of the present disclosure. In addition, for the sake of simplicity of description, the aforementioned embodiments are all expressed as a series of action combinations. However, those skilled in the art should know that the present disclosure is not limited to the order of the actions described, because according to the present disclosure, certain steps can be performed in other orders or simultaneously. Secondly, those skilled in the art should also be aware that the embodiments described in the specification are all optional embodiments, and the actions and modules involved are not necessarily required by the present disclosure.

## Claims

1. A signal transmission system, comprising: a signal transmission host and a signal transmission slave, wherein:
the signal transmission host and the signal transmission slave are connected via a universal serial bus USB3.0 data cable, and the USB3.0 data cable comprises an auxiliary channel;
the auxiliary channel in the USB3.0 data cable is configured to transmit a CAN signal between the signal transmission host and the signal transmission slave.

2. The signal transmission system according to claim 1, wherein the signal transmission host comprises a first identification unit, and the first identification unit is configured to:
identifying a first insertion direction of the USB3.0 data cable relative to the signal transmission host;
based on the first insertion direction, determining whether to switch a data transmission direction of the USB3.0 data cable.

3. The signal transmission system according to claim 2, wherein the signal transmission slave comprises a second identification unit, and the second identification unit is configured to:
identifying a second insertion direction of the USB3.0 data cable relative to the signal transmission slave;
sending a direction data indicating the second insertion direction to the signal transmission host.

4. The signal transmission system according to claim 3, wherein the first identification unit is configured to:
based on the first insertion direction and the direction data, determining whether to switch the data transmission direction of the USB3.0 data cable.

5. The signal transmission system according to claim 1, wherein:
the USB3.0 data cable comprises a first TYPE-C interface and a second TYPE-C interface;
the first TYPE-C interface is configured to connect to the signal transmission host;
the second TYPE-C interface is configured to connect to the signal transmission slave.

6. The signal transmission system according to any one of claims 1 to 5, wherein the signal transmission host comprises a digital switch, and the digital switch is configured to:
in a case where the first identification unit determines to switch the data transmission direction, switching the data transmission direction.

7. The signal transmission system according to any one of claims 1 to 5, wherein the signal transmission slave comprises a camera module, and the signal transmission host comprises an upper monitor of the camera module; and
the camera module is configured to: transmit the data collected by the camera module to the upper monitor via the USB3.0 data cable.

8. The signal transmission system according to any one of claims 1 to 5, wherein the signal transmission host and the signal transmission slave respectively comprise a CAN transceiver; and the CAN transceiver is configured to: transmit the CAN signal.

9. A robot, comprising the signal transmission system according to any one of claims 1 to 8.

10. The robot according to claim 9, wherein the robot is configured to:
performing a time synchronization on the data collected by the camera module via the CAN signal, to obtain a synchronized data;
performing a navigation based on the synchronized data.
